(19) Europäisches Patentamt European Patent Office Office européen des brevets

(11) **EP 4 467 294 A1**

(12) **EUROPÄISCHE PATENTANMELDUNG**

(43) Veröffentlichungstag:
**27.11.2024   Patentblatt 2024/48**

(21) Anmeldenummer: **24163933.5**

(22) Anmeldetag: **15.03.2024**

(51) Internationale Patentklassifikation (IPC):
**B25J 9/16** (2006.01)    **B25J 19/00** (2006.01)
**B23Q 11/00** (2006.01)    **B25J 9/00** (2006.01)

(52) Gemeinsame Patentklassifikation (CPC):
**B25J 9/1633; B23Q 11/001; B25J 9/009;
B25J 9/1638;** B25J 19/0008; G05B 2219/39194;
G05B 2219/40255; G05B 2219/41114

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **25.05.2023   DE 102023113815**

(71) Anmelder: **Deutsches Zentrum für Luft- und
Raumfahrt e.V.
53227 Bonn (DE)**

(72) Erfinder:
• **De Stefano, Marco
82234 Oberpfaffenhofen-Weßling (DE)**

• **Ott, Christian
1100 Wien (AT)**
• **Vijayan, Ria
82234 Oberpfaffenhofen-Weßling (DE)**
• **Mishra, Hrishik
82234 Oberpfaffenhofen-Weßling (DE)**
• **Elhardt, Ferdinad
82234 Oberpfaffenhofen-Weßling (DE)**

(74) Vertreter: **dompatent von Kreisler Selting Werner -
Partnerschaft von Patent- und Rechtsanwälten
mbB
Deichmannhaus am Dom
Bahnhofsvorplatz 1
50667 Köln (DE)**

(54) **VERFAHREN ZUM STEUERN EINER ROBOTEREINRICHTUNG**

(57)     Bei einem Verfahren zum Steuern einer Robotereinrichtung, wobei die Robotereinrichtung zumindest ein Roboterelement aufweist, das um zumindest ein erstes Robotergelenk geschwenkt werden kann,
- Bewegen des zumindest einen Roboterelement mittels zumindest eines Aktuators,
- Steuern des Aktuators mittels einer ersten Aktuatorsteuereinrichtung, wobei erste Steuersignale an den Aktuator gesendet werden,
- Unterstützen der Robotereinrichtung mittels einer Unterstützungseinrichtung, wobei mittels einer Unterstützungs-Steuereinrichtung zweite gravitionskompensierende Steuersignale an die Unterstützungseinrichtung gesendet werden und damit die Unterstützungseinrichtung derart gesteuert wird, dass über ein Kraftaufbringungselement, das an zumindest einer Stelle mit dem Roboterelement verbunden ist, zumindest eine Kraft und/oder ein Moment auf das Roboterelement aufgebracht wird, die bzw. das die wirkende Gravitationslast, die auf das Roboterelement einwirkt, zumindest teilweise kompensiert,
ist vorgesehen,
dass um die auf das Roboterelement einwirkende Gravitationskraft zu kompensieren nicht nur gravitationskompensierende zweite Steuersignale von der Unterstützungs-Steuereinrichtung an die Unterstützereinrichtung gesendet werden, sondern auch zusätzliche erste gravitationskompensierende Steuersignale von der Aktuatorsteuereinrichtung an den Aktuator gesendet werden.

Fig. 1

**Beschreibung**

Die Erfindung betrifft ein Verfahren zum Steuern einer Robotereinrichtung nach Anspruch 1, sowie ein Robotersystem nach Anspruch 12

Es sind Robotereinrichtungen bekannt, die insbesondere zur Verwendung im Weltraum hergestellt werden. Weltraumrobotereinrichtungen werden für Bedingungen im Weltraum konstruiert. Da im Weltraum keine Gravitationskräfte auf die Weltraumrobotereinrichtung wirken, kann bei der Auslegung der Weltraumrobotereinrichtung ein großer Teil der aufgrund der Gravitation nötigen Kräfte vernachlässigt werden. Somit können die Gelenke und/oder Aktuatoren kleiner, leichter und energieeffizienter dimensioniert werden.

Allerdings sollen die Robotereinrichtungen auch auf der Erde betrieben werden, um beispielsweise die Robotereinrichtungen zu testen oder zu verbessern. Dafür muss die Robotereinrichtung unterstützt werden, da ansonsten die Gelenke zu stark belastet werden oder die Aktuatoren die Robotereinrichtung nicht bewegen können. Dafür existieren Unterstützungseinrichtungen, welche die Robotereinrichtungen auf der Erde unterstützen. Dies geschieht beispielsweise mit Heliumballons oder über planar fahrbare, aktive oder passive Auflagetische. Heliumballons, welche je nach Traglast mehrere Meter Durchmesser aufweisen können, tragen über ihre Auftriebskraft zu einer Entlastung bei. Diese werden an den vorgesehenen Stellen an der Robotereinrichtung montiert und ziehen die Robotereinrichtung an dieser Stelle mit einer konstanten Kraft nach oben. Planar fahrbare Auflagetische können beispielsweise über glatte Böden gleiten und die Gelenke der Robotereinrichtung stützen. Bei dieser Methode können die Robotereinrichtungen jedoch nur planare Bewegungen ausführen.

Da die Robotereinrichtung für eine schwerkraftfreie bzw. gravitationkraftfreie Betriebsumgebung ausgelegt ist kann es leicht passieren, dass die Drehmomentgrenzen der Gelenke der Robotereinrichtung in bestimmten Konfigurationen erreicht werden. Daher ist der Arbeitsbereich für Tests am Boden begrenzt. Es besteht zunehmend Bedarf, eine optimale Strategie für die Gavitationskraftkompensation zu finden.

Die Aufgabe der vorliegenden Erfindung ist es daher ein Verfahren zum Steuern einer Robotereinrichtung und ein Robotersystem zu schaffen, bei dem die Strategie für die Gavitationskraftkompensation optimiert ist.

Zur Lösung dieser Aufgabe dienen die Merkmale der Ansprüche 1 und 12.

Die Erfindung sieht in vorteilhafter Weise vor, dass um die auf das Roboterelement einwirkende Gravitationskraft zu kompensieren nicht nur gravitationskompensierende zweite Steuersignale von der Unterstützungs-Steuereinrichtung an die Unterstützereinrichtung gesendet werden, sondern auch zusätzliche erste gravitationskompensierende Steuersignale von der Aktuatorsteuereinrichtung an den Aktuator, der das zumindest eine Roboterelement bewegt, gesendet werden.

Die vorliegende Erfindung hat den Vorteil, dass die auf das Roboterelement wirkende Gravitationslast sowohl durch die Unterstützungseinrichtung als auch durch eine geeignete Steuerung des Robotorelements selbst kompensiert wird. Auf diese Weise können die Gelenkmomente des Roboterelements minimiert werden, um seine Drehmomentgrenzen einzuhalten.

Die auf die Robotereinrichtung wirkende Gravitationslast kann von einer Computereinrichtung berechnet werden und davon abhängig die gravitationskompensierenden ersten und zweiten Steuersignale von der Computereinrichtung berechnet werden und an die Aktuatorsteuereinrichtung und die Unterstützungs-Steuereinrichtung gesendet werden.

Die Kompensation der Gravitationslast mittels der Computereinrichtung kann aufgeteilt werden und zwar in die gravitationskompensierenden ersten Steuersignale und gravitationskompensierenden zweiten Steuersignalen, wobei die Aufteilung auf die ersten und zweiten Steuersignale mittels der Computereinrichtung beliebig festlegt werden kann.

Die optimale Aufteilung der gravitationskompensierenden ersten Steuersignale und gravitationskompensierenden zweiten Steuersignalen können mittels der Computereinrichtung berechnet werden.

Die Aufteilung der gravitationskompensierenden ersten Steuersignale und gravitationskompensierenden zweiten Steuersignalen können mittels der Computereinrichtung derart optimiert werden, dass das bzw. die nötigen Drehmomente in dem zumindest einen Robotergelenke reduziert sind.

Der zumindest eine Aktuator kann ein Motor am oder im mindestens einen Robotergelenk sein.

Das gravitationskompensierenden zweiten Steuersignale kann mittels der Computereinrichtung wie folgt berechnet werden:

$$\gamma_c^* = (W_\gamma + J_{cA} W_\tau J_{cA}^T)^{-1} J_{cA} W_\tau G_A.$$

$\gamma_c^*$ ist ein Vektor, der Kräfte und Momente enthält. Die Matrizen $W_\tau$ und $W_\gamma$ sind die positiven Gewichtungsmatrizen ungleich Null für die Gelenkmomente der Robotereinrichtung und die Kräfte der Unterstützungseinrichtung. Sie können verwendet werden, um die Verteilung der Gravitationslast zwischen Robotereinrichtung und Unterstützungseinrichtung zu definieren. $G_A$ ist eine Auswahl der Gravitationslasten, die von der zuvor berechneten Gesamtgravitationslast G abgezogen werden.

Der Jacobimatrix $J_{cA}$ ist notwendig, um die Kräfte zwischen den Rahmen zu transformieren. Es wird auch mit der Gleichung $J_{cA}^T = J_A^T B^T$ definiert, welche Komponenten zu berücksichtigen sind. B enthält die Information, welche Komponenten die Unterstützungseinrichtung ansetzen kann. Die Unterstützungseinrichtung kann beispielsweise nur Kräfte aufbringen und daher wäre B = (I, 0), wobei I eine 3-dimensionale Identitätsmatrix ist, die den 3 Kraftkomponenten entspricht.

Die zusätzlichen gravitationskompensierenden ersten Steuersignale können mittels der Computereinrichtung wie folgt berechnet werden:

$$\tau_{gA}^* = \left( I - J_{cA}^T (W_\gamma + J_{cA} W_\tau J_{cA}^T)^{-1} J_{cA} W_\tau \right) G_A$$

$\tau_{gA}^*$ ist eine zusätzliche Drehmomentkomponente für die Robotereinrichtung. Die Matrizen $W_\tau$ und $W_\gamma$ sind die positiven Gewichtungsmatrizen ungleich Null für die Gelenkmomente der Robotereinrichtung und die Kräfte der Unterstützungseinrichtung. Sie können verwendet werden, um die Verteilung der Gravitationslast zwischen Robotereinrichtung und Unterstützungseinrichtung zu definieren. $G_A$ ist eine Auswahl der Gravitationslasten, die von der zuvor berechneten Gesamtgravitationslast G abgezogen werden.

Der Jacobimatrix $J_{cA}$ ist notwendig, um die Kräfte zwischen den Rahmen zu transformieren. Es wird auch mit der Gleichung $J_{cA}^T = J_A^T B^T$ definiert, welche Komponenten zu berücksichtigen sind. B enthält die Information, welche Komponenten die Unterstützungseinrichtung ansetzen kann. Die Unterstützungseinrichtung kann beispielsweise nur Kräfte aufbringen und daher wäre B = (I, 0), wobei I eine 3-dimensionale Identitätsmatrix ist, die den 3 Kraftkomponenten entspricht.

Die Aktuatorsteuereinrichtung und die Unterstützungs-Steuereinrichtung können eine gemeinsame Steuereinrichtung sein.

Bei der Unterstützungseinrichtung kann es sich um ein paralleles Robotersystem oder eine serielle Kinematik handeln, die mindestens einen Aktuator aufweisen, der die Elemente der Unterstützungseinrichtung bewegen kann, so dass die Richtung und die Größe der Kraft, die auf das Roboterelement ausgeübt werden kann, einstellbar sein kann.

Die Unterstützungseinrichtung kann ein Seilrobotersystem sein, das zumindest zwei Seilelemente aufweist, wobei jedes Seilelement mit zumindest einem Motor verbunden ist, der das jeweilige Seilelement bewegen kann, so dass die Richtung und Höhe der Kraft, die auf das Roboterelement aufbringbar ist, einstellbar ist.

Die Unterstützungseinrichtung kann auch ein Industrieroboter sein.

Gemäß der vorliegenden Erfindung kann ein Robotersystem vorgesehen sein, mit einer Robotereinrichtung, wobei die Robotereinrichtung zumindest ein Roboterelement aufweist, das um zumindest ein erstes Robotergelenk schwenkbar ist, mit

- zumindest einem Aktuator zum Bewegen des zumindest einen Roboterelement,
- zumindest einer Aktuatorsteuereinrichtung zum Steuern des Aktuators, wobei die Aktuatorsteuereinrichtung dazu ausgebildet ist, ein erstes Steuersignale an den Aktuator zu senden,
- zumindest einer Unterstützungseinrichtung zum Unterstützen der Robotereinrichtung, wobei eine Unterstützungs-Steuereinrichtung vorgesehen ist, die dazu ausgebildet ist zweite gravitionskompensierende Steuersignale an die Unterstützungseinrichtung zu senden und damit die Unterstützungseinrichtung derart zu steuern, dass über ein Kraftaufbringungselement, das an zumindest einer Stelle mit dem Roboterelement verbunden ist, dass zumindest eine Kraft und/oder ein Moment auf das Roboterelement aufbringbar ist, die bzw. das die wirkende Gravitationslast, die auf das Roboterelement einwirkt, zumindest teilweise kompensiert,

wobei, um die auf das Roboterelement einwirkende Gravitationskraft zu kompensieren, die Unterstützungs-Steuereinrichtung und die Aktuatorsteuereinrichtung dazu ausgebildet sind, dass nicht nur gravitationskompensierende zweite Steuersignale von der Unterstützungs-Steuereinrichtung an die Unterstützereinrichtung gesendet werden, sondern auch zusätzliche erste gravitationskompensierende Steuersignale von der Aktuatorsteuereinrichtung an den Aktuator gesendet werden.

Es kann eine Computereinrichtung vorgesehen sein, die dazu ausgebildet ist, die auf die Robotereinrichtung wirkende Gravitationslast zu berechnen und davon abhängig die gravitationskompensierenden ersten und zweiten Steuersignale zu berechnen und an die Aktuatorsteuereinrichtung und die Unterstützungs-Steuereinrichtung zu senden.

Der zumindest eine Aktuator kann ein Motor am oder im mindestens einen Robotergelenk sein.

Die Computereinrichtung kann dazu ausgebildet sein, die Kompensation der Gravitationslast aufzuteilen und zwar in die gravitationskompensierenden ersten Steuersignale und gravitationskompensierenden zweiten Steuersignalen, wobei die Aufteilung auf die ersten und zweiten Steuersignale mittels der Computereinrichtung beliebig festlegbar sind.

Die Computereinrichtung kann dazu ausgebildet sein, die optimale Aufteilung der gravitationskompensierenden ersten Steuersignale und gravitationskompensierenden zweiten Steuersignalen zu berechnen.

Die Computereinrichtung kann dazu ausgebildet sein, die Aufteilung der gravitationskompensierenden ersten Steuersignale und gravitationskompensierenden zweiten Steuersignalen derart zu optimieren, dass das bzw. die nötigen Drehmomente in dem zumindest einen Robotergelenke reduziert sind.

Im Folgenden wird unter Bezugnahme auf die Zeichnungen Ausführungsbeispiele der vorliegenden Erfindung näher erläutert.

Es zeigen schematisch:

Fig. 1          ein erfindungsgemäßes Robotersystem,

Fig. 2          ein erfindungsgemäßes Robotersystem mit Industrieroboter,

Fig. 3          ein erfindungsgemäßes Robotersystem mit Seilzugsystem,

Fig. 4          schematisch dargestelltes erfindungsgemäßes Verfahren,

Fig. 5          ein weiteres erfindungsgemäßes Robotersystem,

Fig. 6 bis Fig. 8     die Ergebnisse von Tests mit dem erfindungsgemäßen Robotersystem,

Fig. 9          ein weiteres erfindungsgemäßes Robotersystem,

Fig. 10 bis Fig. 13     weitere Ergebnisse von Tests mit einem erfindungsgemäßen Robotersystem,

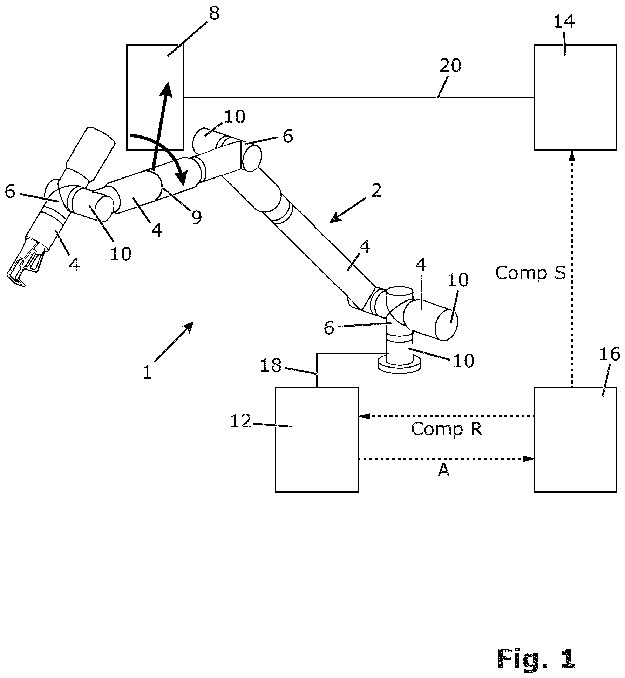

Fig. 1 zeigt eine erfindungsgemäßes Robotersystem 1. Dargestellt ist eine Robotereinrichtung 2, die zumindest ein Roboterelement 4 aufweist, das um mindestens ein Robotergelenk 6 geschwenkt werden kann. Im dargestellten Ausführungsbeispiel weist die Robotereinrichtung mehrere Roboterelemente 4 auf, die jeweils um Robotergelenke 6 schwenkbar sind. Der Betrieb findet unter Gravitationseinfluss statt, also zb auf der Erdoberfläche.

Die Robotorelemente können jeweils mittels zumindest eines Aktuators 10 bewegt werden. Wie im dargestellten Ausführungsbeispiel gezeigt können die Aktuatoren Motoren sein, die in oder an den Robotergelenken 6 angeordnet sind. Die Aktuatoren 10 der Robotoreinrichtung können mittels einer ersten Aktuatorsteuereinrichtung 12 gesteuert werden, wobei erste Steuersignale 18 an den zumindest einen Aktuator 10 gesendet werden,
Ferner ist eine Unterstützungeinrichtung 8 vorgesehen. Mittels einer Unterstützungs-Steuereinrichtung 14 können zweite gravitionskompensierende Steuersignale 20 an die Unterstützungseinrichtung 8 gesendet werden und damit die Unterstützungseinrichtung 8 derart gesteuert werden, dass über ein Kraftaufbringungselement 9, das an zumindest einer Stelle mit zumindest einem Roboterelement 1 verbunden ist, zumindest eine Kraft und/oder ein Moment auf das Roboterelement aufgebracht wird, die bzw. das die wirkende Gravitationslast, die auf das Roboterelement 4 bzw auf die Robotereinrichtung 2 einwirkt, zumindest teilweise kompensiert.

Um die auf das zumindest eine Roboterelement 4 einwirkende Gravitationskraft zu kompensieren können nicht nur gravitationskompensierende zweite Steuersignale 20 von der Unterstützungs-Steuereinrichtung 14 an die Unterstützereinrichtung 8 gesendet werden, sondern auch zusätzliche erste gravitationskompensierende Steuersignale 18 von der Aktuatorsteuereinrichtung 12 an den Aktuator 10 gesendet werden.

Die auf die Robotereinrichtung 1 wirkende Gravitationslast kann von einer Computereinrichtung 16 berechnet werden und davon abhängig die gravitationskompensierenden ersten und zweiten Steuersignale 18, 20 von der Computereinrichtung 16 berechnet werden und an die Aktuatorsteuereinrichtung 12 und die Unterstützungs-Steuereinrichtung 14 gesendet werden.

Aktuatorsteuereinrichtung 12 der Robotereinrichtung 1 stellt die Steuersignale für die Aktuatoren der Robotereinrichtung 1 bereit und kann auch auf Signale von Sensoren reagieren.

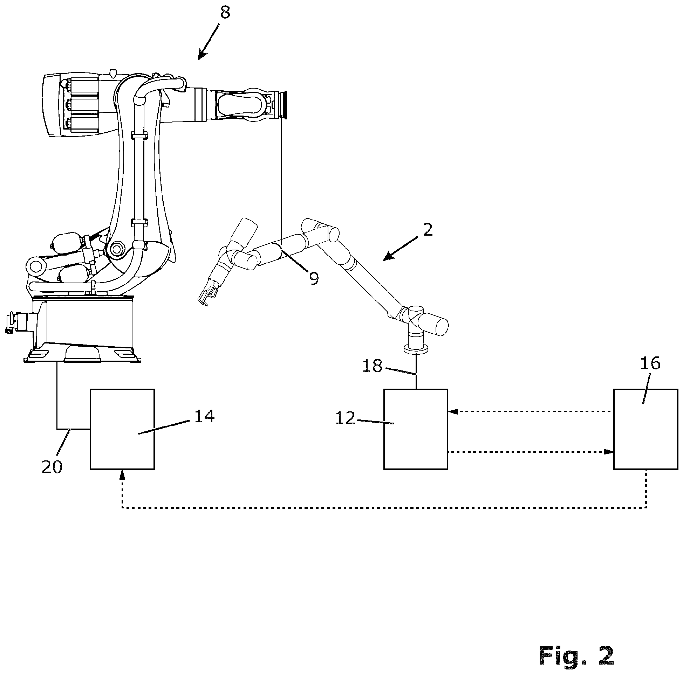

Die Unterstützungeinrichtung 8 kann, wie in Fig.2 dargestellt ist, ein Industrieroboterarm sein, welcher über ein Kraftaufbringungselement 9 eine Kraft und/oder ein Moment auf die Robotereinrichtung 1 aufbringen kann.

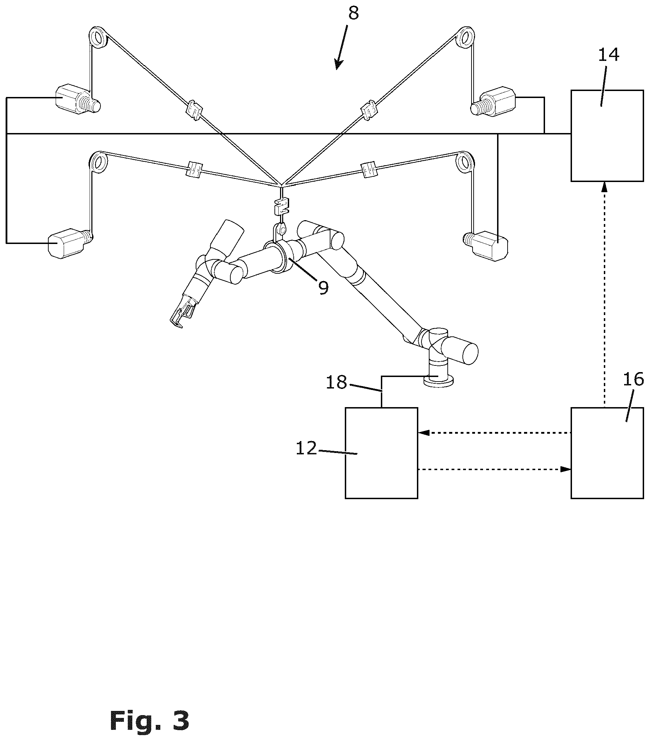

Alternativ kann die Unterstützungeinrichtung 8 auch ein wie in Fig. 3 dargestelltes Seilrobotersystem sein, das zumindest zwei Seilelemente aufweist, wobei jedes Seilelement mit zumindest einem Motor verbunden ist, der das jeweilige Seilelement bewegen kann, so dass die Richtung und Höhe der Kraft, die auf das Roboterelement aufbringbar ist, einstellbar ist.

Die Unterstützungeinrichtung 8 ist über das Kraftaufbringungselement 9 mechanisch mit der Robotereinrichtung 1 gekoppelt. Hierbei können Kräfte und/oder Momente auf den Robotereinrichtung 1 übertragen werden.

Die auf die Robotereinrichtung 1 wirkende Gravitationslast kann von einer Computereinrichtung 16 berechnet werden und davon abhängig kann auch die gravitationskompensierenden ersten und zweiten Steuersignale von der Computereinrichtung 16 berechnet werden und an die Aktuatorsteuereinrichtung 18 und die Unterstützungs-Steuereinrichtung 14 gesendet werden.

Die Kompensation der Gravitationslast kann mittels einer Computereinrichtung 16 aufgeteilt werden und zwar in die gravitationskompensierenden ersten Steuersignale und gravitationskompensierenden zweiten Steuersignalen 18, 20, wobei die Aufteilung auf die ersten und zweiten Steuersignale 18, 20 mittels der Computereinrichtung 16 beliebig festlegt werden kann.

Im dargestellten Ausführungsbeispiel sind die Computereinrichtung 16, die Aktuatorsteuereinrichtung 18 und die Unterstützungs-Steuereinrichtung 14 getrennt voneinander dargestellt. Die die Computereinrichtung 16 und/oder die Aktuatorsteuereinrichtung 18 und/oder die Unterstützungs-Steuereinrichtung 14 können jedoch auch eine gemeinsame Steuereinrichtung sein.

Die optimale Aufteilung der gravitationskompensierenden ersten Steuersignale 18 und gravitationskompensierenden zweiten Steuersignalen 20 können mittels der Computereinrichtung 16 berechnet werden.

Die Aufteilung der gravitationskompensierenden ersten Steuersignale 18 und gravitationskompensierenden zweiten Steuersignalen 20 können mittels der Computereinrichtung 16 derart optimiert werden, dass das bzw. die nötigen Drehmomente in dem zumindest einen Robotergelenke 6 reduziert sind.

Computereinrichtung 16 kann Informationen aus dem Robotersystem 1 nutzen, insbesondere die Positionen der Robotergelenke 6. Diese Informationen können über die Signalleitung A übertragen werden. Die Computereinrichtung 16 berechnet daraus die Gravitationskräfte, die auf den Robotersystem 1 bzw. die Robotereinrichtung 2 bzw. die Roboterelemente 4 wirken. Diese Gravitationskräfte sollen mithilfe von zusätzlichen ersten Steuersignalen auf die Robotereinrichtung 2 sowie auf zweite Steuersignale auf die Unterstützungseinrichtung 8 kompensiert werden. Die Steuersignale 18 für die Robotereinrichtung 2 werden über die Signalleitung (Comp_R) übertragen, die Steuersignale für die Unterstützungseinrichtung 8 über die Signalleitung (Comp_S).

Das erfindungsgemäße Verfahren nutzt vorzugsweise die Computereinrichtung 16, um die gravitationskompensierenden Steuersignale zu berechnen. Ziel bei der Berechnung ist eine Reduktion der nötigen Drehmomente in den Robotergelenken 6 der Robotereinrichtung 2. Weiteres Ziel ist eine änderbare Aufteilung der Gravitationslast auf Robotereinrichtung 2 und Unterstützungseinrichtung 8.

Zunächst kann die Computereinrichtung 16 die für die Robotereinrichtung 2 erforderliche Gravitationskraft G berechnen. Dazu benötigt die Computereinrichtung 16 von der Robotereinrichtung 2 Informationen über die Position der Robotergelenke 6.

Dann kann das gravitationskompensierenden zweiten Steuersignale mittels der Computereinrichtung 16 wie folgt berechnet werden:

$$\gamma_c^* = (W_\gamma + J_{cA} W_\tau J_{cA}^T)^{-1} J_{cA} W_\tau G_A.$$

$\gamma_c^*$ ist ein Vektor, der Kräfte und Momente enthält. $\gamma_c^*$ kann auch als wrench für die Unterstützungseinrichtung 8 bezeichnet werden. Die Matrizen $W_\tau$ und $W_\gamma$ sind die positiven Gewichtungsmatrizen ungleich Null für die Gelenkmomente der Robotereinrichtung und die Kräfte der Unterstützungseinrichtung. Sie können verwendet werden, um die Verteilung der Gravitationslast zwischen Robotereinrichtung und Unterstützungseinrichtung zu definieren. $G_A$ ist eine Auswahl der Gravitationslasten, die von der zuvor berechneten Gesamtgravitationslast G abgezogen werden.

Der Jacobimatrix $J_{cA}$ ist notwendig, um die Kräfte zwischen den Rahmen zu transformieren. Es wird auch mit der Gleichung $J_{cA}^T = J_A^T B^T$ definiert, welche Komponenten zu berücksichtigen sind. B enthält die Information, welche Komponenten die Unterstützungseinrichtung ansetzen kann. Die Unterstützungseinrichtung kann beispielsweise nur Kräfte aufbringen und daher wäre B = (I, 0), wobei I eine 3-dimensionale Identitätsmatrix ist, die den 3 Kraftkomponenten entspricht.

Die zusätzlichen gravitationskompensierenden ersten Steuersignale können mittels der Computereinrichtung 16 wie folgt berechnet werden:

$$\tau_{gA}^* = \left(I - J_{cA}^T(W_\gamma + J_{cA}W_\tau J_{cA}^T)^{-1}J_{cA}W_\tau\right)G_A$$

$\tau_{gA}^*$ ist eine zusätzliche Drehmomentkomponente für die Robotereinrichtung. Die Matrizen $W_\tau$ und $W_\gamma$ sind die positiven Gewichtungsmatrizen ungleich Null für die Gelenkmomente der Robotereinrichtung und die Kräfte der Unterstützungseinrichtung. Sie können verwendet werden, um die Verteilung der Gravitationslast zwischen Robotereinrichtung und Unterstützungseinrichtung zu definieren. $G_A$ ist eine Auswahl der Gravitationslasten, die von der zuvor berechneten Gesamtgravitationslast G abgezogen werden.

Der Jacobimatrix $J_{cA}$ ist notwendig, um die Kräfte zwischen den Rahmen zu transformieren. Es wird auch mit der Gleichung $J_{cA}^T = J_A^T B^T$ definiert, welche Komponenten zu berücksichtigen sind. B enthält die Information, welche Komponenten die Unterstützungseinrichtung ansetzen kann. Die Unterstützungseinrichtung kann beispielsweise nur Kräfte aufbringen und daher wäre B = (I, 0), wobei I eine 3-dimensionale Identitätsmatrix ist, die den 3 Kraftkomponenten entspricht.

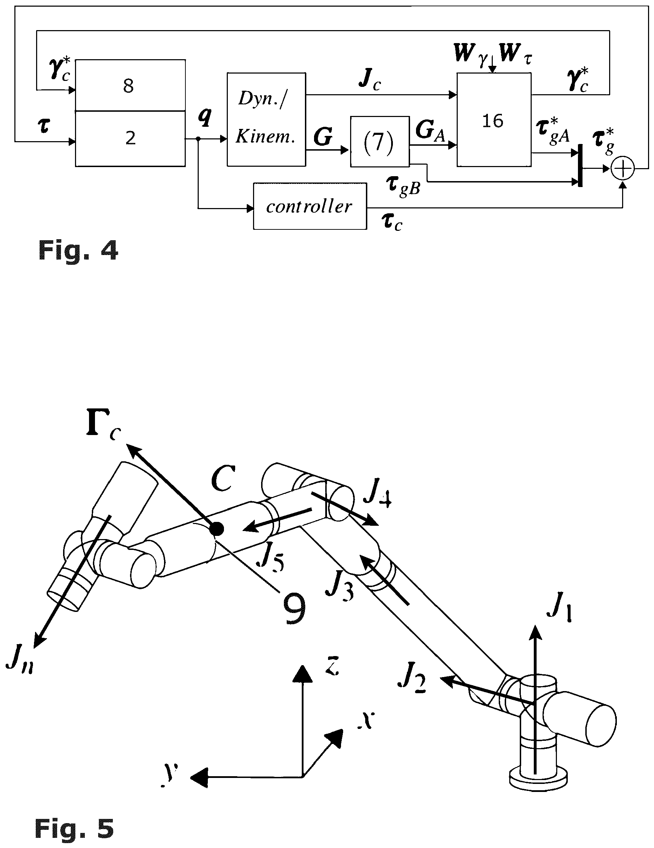

Fig. 4 beschreibt einen Prozess, der durch die oben dargestellten Formeln wiedergegeben ist. $\gamma_c^*$ ist das zweite Steuersignal für die Unterstützungseinrichtung 8. Die Robotereinrichtung 2 verwendet $\tau$ als Eingang für die Drehmomente in den Aktuatoren 10. Beide veranlassen die Robotereinrichtung 2 zur Bewegung, was zu den Gelenkpositionen q der Robotereinrichtung 2 führt. Die Informationen über die Gelenkpositionen werden über eine Signalverbindung an die Computereinrichtung 16 übertragen. Die Computereinrichtung 16 berechnet die Graviatationskräfte G auf den Robotereinrichtung 2. Bei dem Kasten (7) werde spezifische Gravitationslasten ausgewählt.

Die ersten zusätzlichen Steuersignale $\tau_{gA}^*$ und die zweiten Steuersignale $\gamma_c^*$ werden im Computereinrichtung 16 berechnet. Die Robotereinrichtung 2 erhält ein erste Steuersignal $\tau$, dass sowohl das zusätzliche erste Steuersignal $\tau_{gA}^*$ als auch das natürliche erste Steuersignal $\tau_C$ enthält.

Im Folgenden die Herleitung erläutert. Dazu wir auf Fig. 5 verwiesen
Für Dynamik der Robotereinrichtung 2 gilt

$$H(q)\ddot{q} + C(q,\dot{q})\dot{q} + G(q) = \tau + J_c^T(q)\Gamma_c \qquad (1)$$

wobei $q \in \mathbb{R}^n$ die Gelenkwinkelpositionen für eine Robotereinrichtung mit $n$ Gelenken und $\dot{q} \in \mathbb{R}^n$ die Gelenkraten sind. $H(q) \in \mathbb{R}^{n \times n}$ und $C(q,\dot{q}) \in \mathbb{R}^{n \times n}$ sind die Trägheits- und Coriolismatrizen der Robotereinrichtung und $G(q) \in \mathbb{R}^n$ ist das Gravitationsdrehmoment, das auf die Robotergelenke wirkt. Das auf die Gelenke einwirkende Steuerdrehmoment ist $\tau \in \mathbb{R}^n$. Die externen Kräfte und Momente (externe wrench) $\Gamma_c \in \mathbb{R}^6$ auf das System an einem Kontaktpunkt C, erzeugt ein Drehmoment auf die Gelenke, das mit dem Jacobi $J_c(q) \in \mathbb{R}^{6 \times n}$ am Kontaktpunkt transformiert wird. Der externe Schraubenschlüssel besteht aus $\Gamma_c = [F_c^T \quad T_c^T]^T$, wobei

$$F_c \in \mathbb{R}^3 \quad \text{und} \quad T_c \in \mathbb{R}^3$$

die externe Kraft bzw. das externe Drehmoment sind. Die Steuereingabe $\tau$ in (1) kann in $\tau_g$ für die Schwerkraftkompensation und $\tau_C$ für die Erfüllung der gewünschten Steueraufgaben aufgeteilt werden, wie folgt:

$$\tau = \tau_g + \tau_c. \qquad (2)$$

Methoden zur Steuerung von Robotereinrichtungen verwenden traditionell die Technik der Gravitationskraftkompensation, um die auf die Gelenke wirkenden Gravitationskraftmomente zu kompensieren, d. h. durch aktive Anwendung von $\tau_g$ **= G.**

Anschließend wird ein geeigneter Regelungseingang $\tau_C$ im Gelenk- oder kartesischen Raum entworfen, um die Regelungsaufgabe zu erfüllen. Die konfigurationsabhängigen Gravitationskraftmomente können jedoch die individuellen Gelenkmomentgrenzen überschreiten. Dies bedeutet, dass eine aktive Gravitationskraftkompensation in diesen Konfigurationen nicht allein durch die Robotereinrichtung 2 erreicht werden kann. Ziel ist es, die auf die Robotereinrichtung 2 wirkende Gravitationslast **G** auf die internen Gelenkmomente $\tau_g$ und die Komponenten der externen wrench $\Gamma_C$ zu verteilen, die durch eine Unterstützungseinrichtung 8 aufgebracht werden können. Dann muss die folgende Beziehung erfüllt werden, die die Steuerungsaufgabe nicht stört,

$$G = \tau_g + J_c^T \Gamma_c. \qquad (3)$$

$\Gamma_C$ sind die externen Kräfte und Momente (externe wrench) Kontaktpunkt 9, den eine Unterstützungseinrichtung verfolgen muss. Je nach Konstruktion der externen Unterstützungseinrichtung 8 kann es möglich sein, nur bestimmte Komponenten der Kraft und/oder des Drehmoments am Kontaktpunkt aufzubringen. Daher sei $\gamma_c \in \mathbb{R}^m$ die unabhängigen Komponenten des wrench, die auf den Kontaktpunkt C bzw. an dem Kraftaufbringungselement 9 aufgebracht werden können, wobei $1 \le m \le 6$. Ferner sei $B^T \in \mathbb{R}^{6 \times m}$ die wrench-Basis, die $\gamma_C$ auf die Dimension des vollen wrench-Raums abbildet. Dann ist der resultierende wrench $\Gamma_C$ in (3)

$$\Gamma_c = B^T \gamma_c. \qquad (4)$$

Wenn die Unterstützungseinrichtung 8 beispielsweise nur eine Kraft in z-Richtung ausüben kann, dann ist **B**

**=** [0 0 1 0 0 0] und $\gamma_c \in \mathbb{R}^1$. Setzt man also (4) in (3) ein, so erhält man,

$$G = \tau_g + J_c^T B^T \gamma_c. \qquad (5)$$

Der Kontaktpunkt bzw. das Kraftübertragungselement 9 zwischen der Robotereinrichtung 2 und der Unterstützungseinrichtung 8 kann sich an verschiedenen Stellen des der Robotereinrichtung 2 befinden und bestimmt, auf welche der Gelenkmomente der externe wrench einwirken kann. Geht man von Gelenknummern 1, 2, ..i aus, wobei $i \le n$, ist und zwischen der festen Basis und dem Kontaktpunkt bzw. dem Kraftaufbringungselement des Roboters liegen. Dies bedeutet, dass die Jacobi-Transformation am Kontaktpunkt bzw. Kraftaufbringungselement die folgende Struktur hat,

$$J_c^T = \begin{bmatrix} J_A^T \\ 0_{n-i\times 6} \end{bmatrix} \tag{6}$$

Wobei $J_A \in \mathbb{R}^{6\times i}$ der Jacobimatrix ist, der den im Kontaktpunkt angewendeten wrench in Drehmomente an den Gelenken umwandelt in der Menge $A = \{x \mid x \in \mathbb{N}, x \le i\}$. Die Nullen in den unteren Zeilen des Jacobi zeigen, dass der angelegte wrench keinen Einfluss auf die Gelenke in der Menge $B = \{x \mid x \in \mathbb{N}, i < x \le n\}$. hat. Das liegt daran, dass die Gelenke in der Menge $B$ zwischen dem Kontaktpunkt und dem freien Endeffektor liegen. Daraus folgt, dass wir (5) mit Hilfe von (6) weiter vereinfachen und die Terme zwischen den Gelenken in Satz A und $B$ wie folgt aufteilen können,

$$G = \begin{bmatrix} G_A \\ G_B \end{bmatrix} = \begin{bmatrix} \tau_{gA} \\ \tau_{gB} \end{bmatrix} + \begin{bmatrix} J_A^T B^T \gamma_c \\ 0_{n-i\times 1} \end{bmatrix} \tag{7}$$

wobei $G_A$ und $G_B$ die Gravitationskraftmomente der Gelenke in A und B sind. Analog dazu sind $\tau_{gA}$ und $\tau_{gB}$ die Schwerkraftkompensationsmomente des Manipulators für die Gelenke in A und B. Wie aus (7) ersichtlich, kann der externe Schraubenschlüssel die Gelenke in 8 nicht beeinflussen, weshalb diese Gelenke mit den aus dem Dynamikmodell berechneten Schwerkraftmomenten befehligt werden, so wie sie sind, $\tau_{gB} = G_B$. Aus praktischer Sicht sollte die Position von C so gewählt werden, dass $G_B$ die Drehmomentgrenzen für den interessierenden Arbeitsbereich nicht überschreitet. Dies muss in der Entwurfsphase berücksichtigt werden, da die Gelenke, die sich näher am freien Endeffektor des Roboters befinden, ohnehin weniger Schwerkraftmomente erfahren.

Die verbleibenden Gelenkmomente $\tau_{gA}$ und die externen Schlüsselkomponenten $\gamma_c$ können so ausgelegt werden, dass die Schwerkraftlast unter Einhaltung einiger Optimalitätskriterien so auf die beiden Größen verteilt wird, dass die folgende Beziehung aus (7) gilt,

$$G_A = \tau_{gA} + J_{cA}^T \gamma_c \tag{8}$$

wobei der Kontakt-Jacobi Matrix $J_{cA}^T = J_A^T B^T$ ist. $J_{cA}^T$ ist Allgemeinen nicht quadratisch und daher nicht invertierbar ist. Daher können wir $\gamma_c$ nicht direkt lösen, indem wir z. B. die Drehmomente $\tau_{gA} = 0$ setzen. Es wird also eine optimale Lösung für die Verteilung der äußeren Kräfte und der Drehmomente der Gelenkmotoren gesucht.

Um die Schwerkraftkompensationsmomente optimal zwischen den Gelenkmotoren und dem Übertragungseinrichtung zu verteilen, wird das folgende Optimierungsproblem mit (8) als Nebenbedingung formuliert,

$$\min_{(\tau_{gA}, \gamma_c)} \frac{1}{2} \begin{bmatrix} \tau_{gA}^T & \gamma_c^T \end{bmatrix} \begin{bmatrix} W_\tau & 0 \\ 0 & W_\gamma \end{bmatrix} \begin{bmatrix} \tau_{gA} \\ \gamma_c \end{bmatrix} \tag{9}$$

$$\text{s.t. } G_A = \tau_{gA} + J_{cA}^T \gamma_c \tag{10}$$

$$W_\tau \in \mathbb{R}^{i \times i}$$

wobei $W_\tau \in \mathbb{R}^{i \times i}$ und $W_\gamma \in \mathbb{R}^{m \times m}$ die Gewichtungsmatrizen für die Gelenkmomente und die externen wrench-Komponenten sind. Dabei ist zu beachten, dass die Eingaben der Robotereinrichtung $\tau_{gA}$ und die Eingaben der Übertragungseinrichtung $\gamma_C$ in (9) nicht gekoppelt sind, da die Eingaben im vorliegenden Ausführungsbeispiel von zwei separaten Hardwaresystemen stammen.

Zur Lösung des Optimierungsproblems wird die Lagrange-Multiplikator-Methode angewandt, bei der die Zielfunktion durch eine Reihe von nicht-negativen multiplikativen Lagrange-Multiplikatoren ($\lambda \geq 0$ ) um die Gleichungen der Nebenbedingungen erweitert wird,

$$L = \frac{1}{2} \begin{bmatrix} \tau_{gA}^T & \gamma_c^T \end{bmatrix} \begin{bmatrix} W_\tau & 0 \\ 0 & W_\gamma \end{bmatrix} \begin{bmatrix} \tau_{gA} \\ \gamma_c \end{bmatrix} + \lambda^T (G_A - \tau_{gA} - J_{cA}^T \gamma_c).$$

$$(11)$$

Das Minimum der modifizierten Funktion L, die die Nebenbedingung erfüllt, wird berechnet als

$$\nabla L(x, \lambda) = 0, \quad \text{with } x = (\tau_{gA}, \gamma_c) \qquad (12)$$

was dazu führt,

$$\frac{\partial L}{\partial \tau_{gA}} = W_\tau \tau_{gA} - \lambda = 0 \qquad (13)$$

$$\frac{\partial L}{\partial \gamma_c} = W_\gamma \gamma_c - J_{cA} \lambda = 0 \qquad (14)$$

$$\frac{\partial L}{\partial \lambda} = G_A - \tau_{gA} - J_{cA}^T \gamma_c = 0 \qquad (15)$$

Aus (13) und (15) ergibt sich der Lagrangesche Multiplikator als

$$\lambda = W_\tau (G_A - J_{cA}^T \gamma_c) \qquad (16)$$

Wenn man (16) in (14) einsetzt, ergeben sich die optimalen wrench, $\gamma_c^*$

$$\gamma_c^* = (W_\gamma + J_{cA} W_\tau J_{cA}^T)^{-1} J_{cA} W_\tau G_A. \qquad (17)$$

Die optimierten Gelenkmomente, $\tau_{gA}^*$ , können durch Substitution von (17) in (10) erhalten werden, was zu folgendem Ergebnis führt,

$$\tau_{gA}^* = \left( I - J_{cA}^T (W_\gamma + J_{cA} W_\tau J_{cA}^T)^{-1} J_{cA} W_\tau \right) G_A. \qquad (18)$$

Die Lösungen in (17) und (18) verteilen die Gravitationsmomente $G_A$ optimal auf $\gamma_c$ und $\tau_{gA}$. Insbesondere ist

(17) die gewünschte Kraft, die vom externen Träger verfolgt werden soll, und (18) ist der Gelenkdrehmoment-Eingang zur Robotereinrichtung für die Gelenke in der Menge A. Die Existenz der Lösungen (17)-(18) ist in Tabelle I zusammengefasst und wird wie folgt diskutiert, wobei $A > 0$ bedeutet, dass die generische Matrix $A$ positiv definit ist.

TABLE 1

| Case | Weight | Dimensionality | | | Singularityindependent |
|------|--------|----------------|-----|-----|------------------------|
| | | $i > m$ | $i = m$ | $i < m$ | |
| (i) | $W_\tau > 0$, $W_\gamma = 0$ | $\gamma_c^* = (J_{cA} W_\tau J_{cA}^T)^{-1} J_{cA} W_\tau G_A$ <br> $\tau_{gA}^* = (I - J_{cA}^T (J_{cA} W_\tau J_{cA}^T)^{-1} J_{cA} W_\tau) G_A$ | $\gamma_c^* = J_{cA}^{-T} G_A$ <br> and $\tau_{gA}^* = 0$ | ill-posed | ✗ |
| (ii) | $W_\tau = 0$, $W_\gamma > 0$ | $\gamma_c^* = 0$ and $\tau_{gA}^* = G_A$ | | | ✓ |
| (iii) | $W_\tau > 0$, $W_\gamma > 0$ | $\gamma_c^*$ as in (17) and $\tau_{gA}^*$ as in (18) | | | ✓ |

Tabelle 1 zeigt die optimalen Lösungen des Problems zusammengefasst für verschiedene Fälle der Gewichtsmatizen, der Dimension und der Singularität.

*Fall (i): $W_\tau > 0$ und $W_\gamma = 0$*. Das Vorhandensein der Lösung hängt von der Dimensionalität des äußeren wrench der Robotereinrichtung und dem Rang der Jacobi-Matrix ab:

- Wenn $i > m$ ist, ist die Dimension der Gelenke $i$, die durch die Schwerkraft kompensiert werden können, größer als die Dimension der externen wrench-Komponenten m. Die Lösung existiert nur in singularitätsfreien Roboterkonfigurationen. In diesem Fall werden die aus den optimierten externen wrench-Komponenten resultierenden Gelenkmomente, . $J_{cA}^T \gamma_c^*$ , projiziert $G_A$ auf den Bereichsraum (Bild) von $J_{cA}^T$ , und $\tau_{gA}^*$ in (18) projiziert $G_A$ auf den Nullraum (Kern) von $J_{cA}^T$ . Mit anderen Worten, die Gelenkmomente, die nicht durch den externen wrench erzeugt werden können, werden aktiv durch die Robotergelenkmomente kompensiert.

Wenn $i = m$ ist, ist die Dimension der Gelenke $i$ gleich der Dimension der externen wrench-Komponenten m. In diesem Fall ist $J_{cA}^T$ quadratisch, und in singularitäts-freien Roboterkonfigurationen wird $\gamma_c^*$ mit Hilfe der Umkehrung der transponierten Jacobi-Matrix erhalten. Mit anderen Worten: Die Unterstützungseinrichtung 8 kann die Gravitationskraftmomente vollständig kompensieren und es müssen keine Gelenkmomente aufgebracht werden.

Wenn $i < m$ ist, ist die Dimension der Gelenke $i$, die durch die Gravitationskraft kompensiert werden können, kleiner als die Dimension der äußeren wrench-Komponenten m. In diesem Fall wird das Problem durch die Einstellung $W_\gamma = 0$ unlösbar. Dies stellt keine Einschränkung in der physikalischen Fähigkeit des Unterstützungseinrichtung dar, sondern nur in der Problemdefinition, da es keine Metrik gibt, für die eine optimale Lösung zu finden ist. Die geringsten Kosten in (9) würden für $\tau_{gA}^* = 0$ erzielt. Da es sich in diesem Fall um eine $J_{cA}^T$ a $i \times m$-Matrix mit $i < m$ handelt, ist das Problem immer noch nicht optimal gelöst, wie aus (10) hervorgeht. Dies führt dazu, dass es mehrere Lösungen für $\gamma_C$ gibt, aber da $W_\gamma = 0$ keine der Lösungen gewählt werden kann, ist das Problem schlecht gestellt. Um eine optimale Lösung zu erhalten, wenn $i < m$ ist, ist es daher sinnvoll,

$W_\gamma$ auf einen Wert ungleich Null zu setzen.

*Fall (ii)*[1] : Wenn $W_\tau = 0$ und $W_\gamma > 0$, keine Begrenzung der Drehmomente der internen Gelenkmotoren aufweisen,

dann ist, $\gamma_c^* = 0 \quad \tau_{gA}^* = G_A$ und die Lösung singularitätsunabhängig.

*Fall (iii):* Wenn $W_\tau > 0$ and $W_\gamma > 0$, existiert immer eine optimale Lösung. Dies ist unabhängig vom Rang der Jacobikomponente oder der Dimensionalität der externen wrench-Komponenten, da die Invertierbarkeit der gewichteten Terme in (17) und (18) durch die positive Definiertheit von $W_\gamma$ bestimmt wird. Daher gibt es auch für singuläre Konfigurationen des Roboters eine Lösung.

Die vorgeschlagene Strategie ist in Fig. 4 schematisch dargestellt. Aus den gemessenen *Gelenkpositionen,* $q$, wird die Dynamik und Kinematik *(Dyn. I Kinem.)* des Roboterelements berechnet. Die entsprechende Jacobi am Kopplungspunkt, $J_C$ und der Vektor $G_A$ sind die Eingabe für die Computereinrichtung 16, dessen Ausgaben an die Unterstützungseinrichtung 8 und den Robotereinrichtung 2 gesendet werden. Das endgültige Signal für den Robotereinrichtung ist $\tau_g^* = [\tau_{gA}^*; \tau_{gB}]$ ist. Darin enthalten sind das optimierte Drehmoment, $\tau_{gA}^*$ und das Gravitationskraftdrehmoment für die Gelenke in Satz B (zwischen dem Kontaktpunkt und dem freien Endeffektor der Roboterkette). Aus Fig. 4 ist ersichtlich, dass die vorgeschlagene Strategie die Validierung eines controller, d. h. des unabhängigen Drehmomenteingangs $\tau_C$, nicht beeinträchtigen wird.

Es ist zu beachten, dass aus praktischer Sicht der externe Träger hardwaretechnische Grenzen haben könnte, z. B. bei der Anwendung einer Mindestkraft $\gamma_C$. Dies könnte bei der Lösung berücksichtigt werden, indem zusätzliche Ungleichheitsbedingungen für das Optimierungsproblem in (9), (10) hinzugefügt werden.

Im Folgenden werden die Simulations- und Versuchsergebnisse gezeigt, die mit der vorgeschlagenen Methode erzielt wurden. Bei dem betrachteten Robotersystem handelt es sich um den CAESAR-Arm, einen drehmomentgesteuerten Roboter mit 7 dof und einer Länge von etwa 2,4 min in gestreckter Konfiguration. Sein Gewicht beträgt etwa 60 *kg* und das maximal zulässige Gelenkdrehmoment beträgt $\pm$ 80 *Nm,* siehe. Die Gewichtungsmatrizen sind definiert als

$$W_\tau = diag(1/\tau_{i,max}^2)$$

, wobei $\tau_{i,max}$ das maximale Drehmoment des *i-ten* Gelenks ist und

$$W_\gamma = diag(1/\gamma_{i.max}^2)$$

, wobei $\gamma_{i,max}$ das Maximum der die äußere Komponente des wrench. Um die Flexibilität der Methode zu zeigen, werden bei der Validierung in Simulation und Experiment verschiedene Kraftangriffspunkte C und verschiedene Unterstützungseinrichtunge berücksichtigt, die verschiedene Komponenten des äußeren wrench verfolgen können.

Um die Flexibilität der Methode zu verdeutlichen, wird angenommen, dass sich der Kontaktpunkt Cz. B. bei $J_4$ befindet (siehe Fig. 5) und die Unterstützungseinrichtung 8 die Kraft in x-y-z und das Drehmoment nur in x und y verfolgen kann. Das bedeutet, dass die Menge A, die zwischen der festen Basis und dem Kontaktpunkt C liegt, A = {1,2,3,4}, B = {5,6,7} ist und die wrench-Basis der Unterstützungseinrichtung $B = [I_{5\times5} \ 0_{5\times1}]$ sein wird. Das Gewicht $\tau_{i,max}$, = 80 *Nm* wird für $W_\tau$, und $\gamma_{i,max}$ = 500 *N,Nm* wird für $W_\gamma$ gewählt.

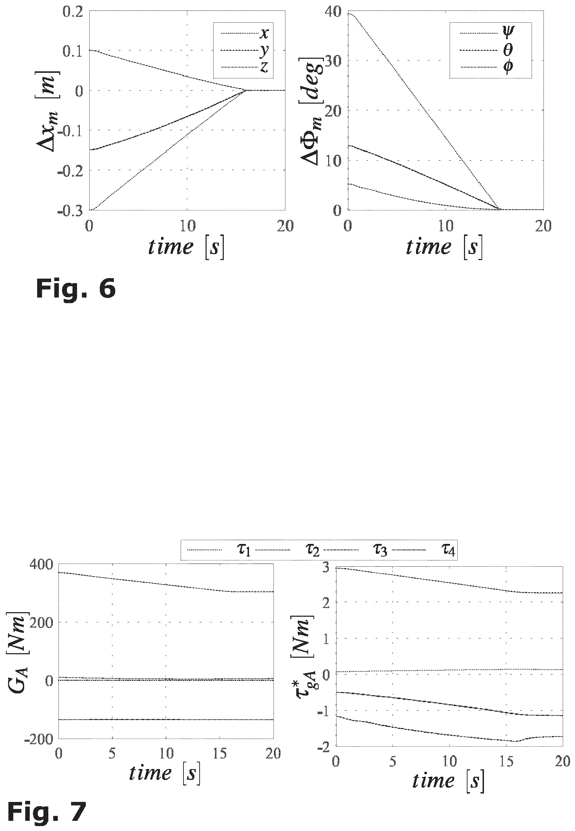

Ausgehend von der in Fig. 5 gezeigten Ausgangskonfiguration wird dem Werkzeug des CAESAR-Arms mit Hilfe eines kartesischen Impedanzreglers eine relative Position im kartesischen Koordinatensystem von [-0,3 0,1 - 0,15] m und eine relative Orientierung von [40 5 12] deg vorgegeben. Der Positions- und Orientierungsfehler des Reglers während der Bewegung ist in Fig. 6 dargestellt.

Der Nutzen der vorgeschlagenen Methode ist in Fig. 7 dargestellt. Wird die vorgeschlagene Methode nicht angewandt, überschreiten die vom Arm benötigten Gravitationsmomente den Grenzwert von $\pm$ 80 Nm (siehe Fig.7 (links) mit Werten bis 370 *Nm* und -130 Nm).

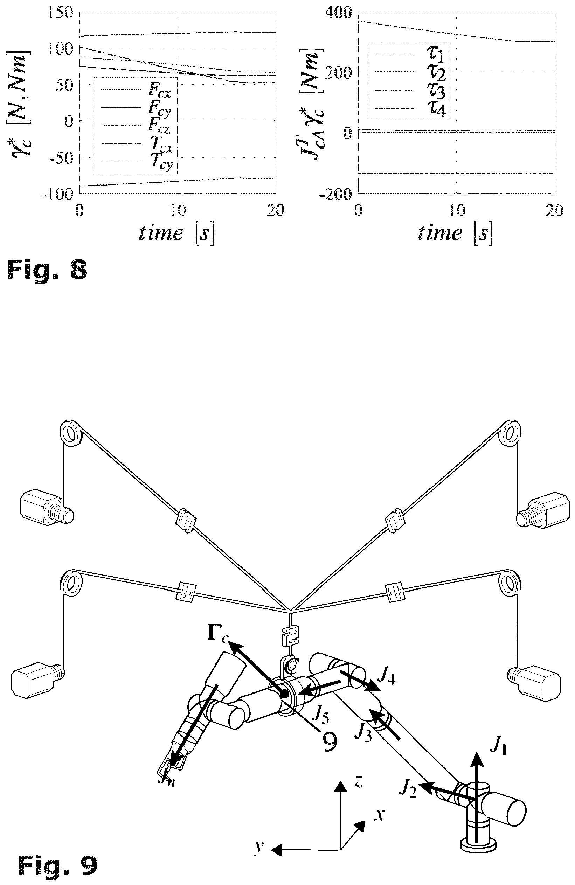

Fig.7 (rechts) zeigt das aus dem vorgeschlagenen Verfahren resultierende Gravitationskraftdrehmoment im Satz A. Wie man sieht, beträgt das maximale Drehmoment jetzt weniger als 3 *Nm.* Um eine vollständige Kompensation der Schwerkraft zu erreichen, muss der Träger einem erforderlichen wrench folgen, der das Ergebnis der vorgeschlagenen Methode ist (siehe Fig. 8, links). Zu Validierungszwecken zeigt Fig. 8 (rechts) die gleiche Kraft, jedoch transformiert in den Gelenkraum der Robotereinrichtung. Aus Fig. 7 und Fig. 8 (rechts) ist ersichtlich, dass eine vollständige Kompensation der Schwerkraft von $G_A$ erreicht wird und die Bedingung in (10) erfüllt ist.

Als Unterstützungseinrichtung 8 wird ein seilgetriebenes System verwendet, das über ein Kraftübertragungselement 9 am Punkt C mit dem CAESAR-Arm verbunden ist (siehe Fig. 9). Die Steuerung des Unterstützungseinrichtung bei 4 *kHz* und ist in der Lage, einer gewünschten kartesischen Kraft mit Hilfe einer Admittanzsteuerung zu folgen. Die gewünschte Kraft ist somit der Eingang zu einem dynamischen Modell, bei dem die Beschleunigung errechnet und diskret integriert. So wird dem seilgeführten System durch die inverse Kinematik ein neuer Sollwert vorgegeben. Der in Fig. 9 betrachtete Unterstützungseinrichtung 8 verfügt über vier Motoren und kann nur translatorische Kräfte entlang der Komponenten x - y - z aufbringen und verfolgen, *aber* keine Drehmomente. Dies bedeutet, dass die Basis des wrench$B$= [$I_{3\times3}$ $0_{3\times3}$] ist. Außerdem ist die Lage des Punktes $C$ wurde nach $J_5$ so gewählt, dass $G_B$ die Drehmomentgrenzen für den zu erwartenden Arbeitsbereich nicht überschreitet. Daraus ergibt sich für die Menge $A$ A = {1,2,3,4,5} und für die Menge zwischen dem Kontaktpunkt und dem freien Endeffektor B = {6,7}. Wie in Abschnitt III mit (7) erläutert, kann $\tau_{gB}$ = $G_B$ , d. h. die am Punkt $C$ angelegte Kraft, das Gelenk in Menge $B$ nicht beeinflussen. werden als $\tau_{i,max}$ = 80 $Nm$ and $\gamma_{i,max}$ = 750 N ausgewählt.

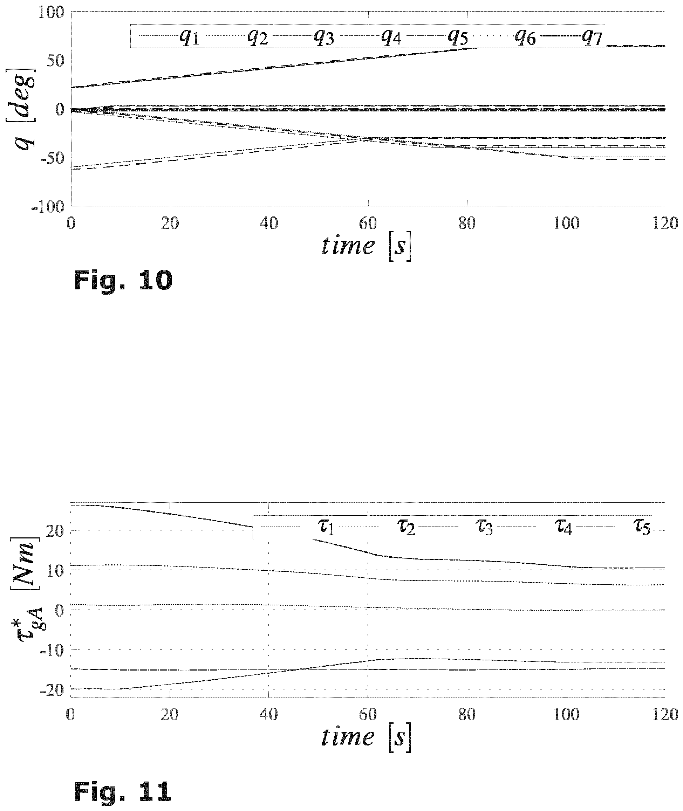

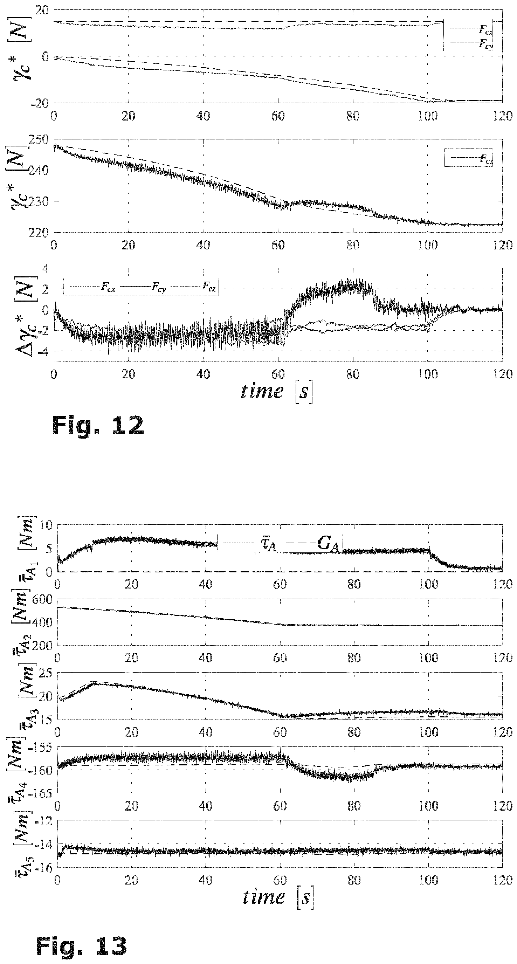

Im Experiment wird die Bewegung des CAESAR von einer Ausgangsposition bis zur endgültigen Position unter Verwendung eines Gelenkimpedanzreglers bei 1 $kHz$ untersucht. Die Trajektorie der Gelenkposition, die der Robotereinrichtung befohlen wurde, ist in Fig. 10 dargestellt und mit den gemessenen Daten verglichen. Die optimalen Schwerkraftmomente, die sich aus der vorgeschlagenen Methode ergeben, sind in Fig. 11 dargestellt und werden dem CAESAR-Arm befohlen. Wie zu sehen ist, liegen sie unter den betrachteten Drehmoment-Grenzwerten von 80 $Nm$. Die optimalen Kräfte, die für die Unterstützungseinrichtung erzeugt werden, sind in Fig. 12 dargestellt und mit den gemessenen Werten des Trägersystems verglichen. Der Fehler bei der Kraftverfolgung $\Delta\gamma_c^*$ liegt unter 4 N und nähert sich in statischer Haltung (siehe nach 100s) gegen Null. Zur Validierung wird das erforderliche Schwerkraftmoment während der Bewegung, $G_A$, mit den auf die Robotereinrichtung wirkenden Gesamtkräften (interne Gelenkmomente und externe Kräfte des Trägers) verglichen. Dieses wird aus der Messung wie folgt berechnet,

$$\bar{\tau}_A = \tau_{msr,A} - \tau_{c,A} + J_{CA}^T \gamma_{C_{msr}}^*$$

wobei (msr,A) den entsprechenden Messwert in der Menge A angibt. Der Vergleich ist in Fig. 13 dargestellt, wobei der größte Fehler am Gelenk 1 zu verzeichnen ist, der durch den Admittanz-kontrollierten Unterstützungseinrichtung während der Verfolgung verursacht wird. In statischer Haltung geht der Fehler jedoch gegen Null (siehe nach 100s). Dieses Experiment zeigt, dass die vorgeschlagene Strategie für die Erprobung des Robotersystems am Boden geeignet ist.

Erfindungsgemäß wird eine Strategie zur Kompensation der Gravitationskraft einer Robotereinrichtung für Tests unter Einfluss der Gravitationskraft vorgeschlagen. Der Ansatz löst ein optimales Problem, das das Drehmoment der Gelenke minimiert und als Ergebnis eine gewünschte Kraft liefert, die von einer Unterstützungseinrichtung verfolgt werden kann. Experimentelle Ergebnisse mit dem CAESAR-Arm zeigen die Wirksamkeit der Methode, bei der ein kabelaufgehängtes System als Unterstützungseinrichtung verwendet wurde, um die gewünschte Kompensationskraft zu erreichen.

## Patentansprüche

1. Verfahren zum Steuern einer Robotereinrichtung, wobei die Robotereinrichtung zumindest ein Roboterelement aufweist, das um zumindest ein erstes Robotergelenk geschwenkt werden kann,

   - Bewegen des zumindest einen Roboterelement mittels zumindest eines Aktuators,
   - Steuern des Aktuators mittels einer ersten Aktuatorsteuereinrichtung, wobei erste Steuersignale an den Aktuator gesendet werden,
   - Unterstützen der Robotereinrichtung mittels einer Unterstützungseinrichtung, wobei mittels einer Unterstützungs-Steuereinrichtung zweite gravitionskompensierende Steuersignale an die Unterstützungseinrichtung gesendet werden und damit die Unterstützungseinrichtung derart gesteuert wird, dass über ein Kraftaufbringungselement, das an zumindest einer Stelle mit dem Roboterelement verbunden ist, zumindest eine Kraft und/oder ein Moment auf das Roboterelement aufgebracht wird, die bzw. das die wirkende Gravitationslast, die auf das Roboterelement einwirkt, zumindest teilweise kompensiert,

   **dadurch gekennzeichnet,**
   **dass** um die auf das Roboterelement einwirkende Gravitationskraft zu kompensieren nicht nur gravitationskompensierende zweite Steuersignale von der Unterstützungs-Steuereinrichtung an die Unterstützereinrichtung gesendet werden, sondern auch zusätzliche erste gravitationskompensierende Steuersignale von der Aktuatorsteuereinrichtung an den Aktuator gesendet werden.

2. Verfahren nach Anspruch 1, **dadurch gekennzeichnet, dass** die auf die Robotereinrichtung wirkende Gravitationslast von einer Computereinrichtung berechnet wird und davon abhängig die gravitationskompensierenden ersten und zweiten Steuersignale von der Computereinrichtung berechnet werden und an die Aktuatorsteuereinrichtung und die Unterstützungs-Steuereinrichtung gesendet werden.

3. Verfahren nach Anspruch 1 oder 2, **dadurch gekennzeichnet, dass** die Kompensation der Gravitationslast mittels der Computereinrichtung aufgeteilt wird und zwar in die gravitationskompensierenden ersten Steuersignale und gravitationskompensierenden zweiten Steuersignalen, wobei die Aufteilung auf die ersten und zweiten Steuersignale mittels der Computereinrichtung beliebig festlegt wird.

4. Verfahren nach Anspruch 3, **dadurch gekennzeichnet, dass** die optimale Aufteilung der gravitationskompensierenden ersten Steuersignale und gravitationskompensierenden zweiten Steuersignalen mittels der Computereinrichtung berechnet wird.

5. Verfahren nach Anspruch 4, **dadurch gekennzeichnet, dass** Aufteilung der gravitationskompensierenden ersten Steuersignale und gravitationskompensierenden zweiten Steuersignalen mittels der Computereinrichtung derart optimiert wird, dass das bzw. die nötigen Drehmomente in dem zumindest einen Robotergelenke reduziert ist.

6. Verfahren nach einem der Ansprüche 1 bis 5, **dadurch gekennzeichnet, dass** der zumindest eine Aktuator ein Motor am oder im mindestens einen Robotergelenk ist.

7. Verfahren nach einem der Ansprüche 1 bis 5, **dadurch gekennzeichnet, dass** gravitationskompensierenden zweiten Steuersignale mittels der Computereinrichtung wie folgt berechnet werden:

$$\boldsymbol{\gamma}_c^* = (\boldsymbol{W}_\gamma + \boldsymbol{J}_{cA}\boldsymbol{W}_\tau \boldsymbol{J}_{cA}^T)^{-1} \boldsymbol{J}_{cA}\boldsymbol{W}_\tau \boldsymbol{G}_A.$$

8. Verfahren nach einem der Ansprüche 1 bis 5, **dadurch gekennzeichnet, dass** die zusätzlichen gravitationskompensierenden ersten Steuersignale mittels der Computereinrichtung wie folgt berechnet werden:

$$\boldsymbol{\tau}_{gA}^* = \left( \boldsymbol{I} - \boldsymbol{J}_{cA}^T (\boldsymbol{W}_\gamma + \boldsymbol{J}_{cA}\boldsymbol{W}_\tau \boldsymbol{J}_{cA}^T)^{-1} \boldsymbol{J}_{cA}\boldsymbol{W}_\tau \right) \boldsymbol{G}_A$$

9. Verfahren nach einem der Ansprüche 1 bis 8, **dadurch gekennzeichnet, dass** die Aktuatorsteuereinrichtung und die Unterstützungs-Steuereinrichtung eine gemeinsame Steuereinrichtung sind.

10. Verfahren nach einem der Ansprüche 1 bis 9, **dadurch gekennzeichnet, dass** es sich bei der Unterstützungseinrichtung um ein paralleles Robotersystem oder eine serielle Kinematik handelt, die mindestens einen Aktuator aufweist, der die Elemente der Unterstützungseinrichtung bewegen kann, so dass die Richtung und die Größe der Kraft, die auf das Roboterelement ausgeübt werden kann, einstellbar ist.

11. Verfahren nach Anspruch 10, **dadurch gekennzeichnet, dass** die Unterstützungseinrichtung ein Seilrobotersystem ist, das zumindest zwei Seilelemente aufweist, wobei jedes Seilelement mit zumindest einem Motor verbunden ist, der das jeweilige Seilelement bewegen kann, so dass die Richtung und Höhe der Kraft, die auf das Roboterelement aufbringbar ist, einstellbar ist.

12. Robotersystem, mit
einer Robotereinrichtung, wobei die Robotereinrichtung zumindest ein Roboterelement aufweist, das um zumindest ein erstes Robotergelenk schwenkbar ist,

- zumindest einem Aktuator zum Bewegen des zumindest einen Roboterelement,
- zumindest einer Aktuatorsteuereinrichtung zum Steuern des Aktuators, wobei die Aktuatorsteuereinrichtung dazu ausgebildet ist, ein erstes Steuersignale an den Aktuator zu senden,
- zumindest einer Unterstützungseinrichtung zum Unterstützen der Robotereinrichtung, wobei eine Unterstützungs-Steuereinrichtung vorgesehen ist, die dazu ausgebildet ist zweite gravitionskompensierende Steuersignale an die Unterstützungseinrichtung zu senden und damit die Unterstützungseinrichtung derart zu steuern, dass über ein Kraftaufbringungselement, das an zumindest einer Stelle mit dem Roboterelement verbunden ist, zumindest eine Kraft und/oder ein Moment auf das Roboterelement aufbringbar ist, die bzw. das die wirkende Gravitationslast, die auf das Roboterelement einwirkt, zumindest teilweise kompensiert,

**dadurch gekennzeichnet,**
**dass**, um die auf das Roboterelement einwirkende Gravitationskraft zu kompensieren, die Unterstützungs-Steuereinrichtung und die Aktuatorsteuereinrichtung dazu ausgebildet sind, dass nicht nur gravitationskompensierende zweite Steuersignale von der Unterstützungs-Steuereinrichtung an die Unterstützereinrichtung gesendet werden, sondern auch zusätzliche erste gravitationskompensierende Steuersignale von der Aktuatorsteuereinrichtung an den Aktuator gesendet werden.

13. Robotersystem nach Anspruch 12, **dadurch gekennzeichnet, dass** eine Computereinrichtung vorgesehen ist, die dazu ausgebildet ist, die auf die Robotereinrichtung wirkende Gravitationslast zu berechnen und davon abhängig die gravitationskompensierenden ersten und zweiten Steuersignale zu berechnen und an die Aktuatorsteuereinrichtung und die Unterstützungs-Steuereinrichtung zu senden.

14. Robotersystem nach Anspruch 12 oder 13, **dadurch gekennzeichnet, dass** der zumindest eine Aktuator ein Motor am oder im mindestens einen Robotergelenk ist.

15. Robotersystem nach Anspruch 13 oder 14 **dadurch gekennzeichnet, dass** die Computereinrichtung dazu ausgebildet ist, die Kompensation der Gravitationslast aufzuteilen und zwar in die gravitationskompensierenden ersten Steuersignale und gravitationskompensierenden zweiten Steuersignalen, wobei die Aufteilung auf die ersten und zweiten Steuersignale mittels der Computereinrichtung beliebig festlegbar sind.

16. Robotersystem nach Anspruch 15, **dadurch gekennzeichnet, dass** die Computereinrichtung dazu ausgebildet ist, die optimale Aufteilung der gravitationskompensierenden ersten Steuersignale und gravitationskompensierenden zweiten Steuersignalen zu berechnen.

17. Robotersystem nach Anspruch 15 oder 16, **dadurch gekennzeichnet, dass** die Computereinrichtung dazu ausgebildet ist, die Aufteilung der gravitationskompensierenden ersten Steuersignale und gravitationskompensierenden zweiten Steuersignalen derart zu optimieren, dass das bzw. die nötigen Drehmomente in dem zumindest einen Robotergelenke reduziert sind.

**Fig. 1**

**Fig. 2**

**Fig. 3**

**Fig. 4**

**Fig. 5**

Fig. 6

Fig. 7

Fig. 8

Fig. 9

**Fig. 10**

**Fig. 11**

**Fig. 12**

**Fig. 13**

Europäisches
Patentamt

European
Patent Office

Office européen
des brevets

# EUROPÄISCHER RECHERCHENBERICHT

**Nummer der Anmeldung**

EP 24 16 3933

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2013/013109 A1 (BRUDNIOK SVEN [DE] ET AL) 10. Januar 2013 (2013-01-10) <br> * Absatz [0015] * <br> * Absatz [0049] - Absatz [0050] * <br> * Abbildung 1 * <br> - - - - - | 1-17 | INV. <br> B25J9/16 <br> B25J19/00 <br> B23Q11/00 <br> B25J9/00 |
| A | CN 104 325 460 A (TIANJIN AEROSPACE ELECTROMECHANICAL EQUIPMENT RES INST) 4. Februar 2015 (2015-02-04) <br> * das ganze Dokument * <br> - - - - - | 1-17 | |
| A | CN 101 913 153 A (HONGBING FAN) 15. Dezember 2010 (2010-12-15) <br> * das ganze Dokument * <br> - - - - - | 1-17 | |

**RECHERCHIERTE SACHGEBIETE (IPC)**

G05B
B25J

Der vorliegende Recherchenbericht wurde für alle Patentansprüche erstellt

| Recherchenort | Abschlußdatum der Recherche | Prüfer |
|---|---|---|
| Den Haag | 29. August 2024 | Falconi, Riccardo |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 3933

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2024

| Im Recherchenbericht angeführtes Patentdokument | Datum der Veröffentlichung | Mitglied(er) der Patentfamilie | Datum der Veröffentlichung |
|---|---|---|---|
| US 2013013109 A1 | 10-01-2013 | CN 102729257 A | 17-10-2012 |
| | | DE 102011006992 A1 | 08-05-2013 |
| | | DK 2508308 T3 | 30-11-2015 |
| | | EP 2508308 A1 | 10-10-2012 |
| | | KR 20120115108 A | 17-10-2012 |
| | | US 2013013109 A1 | 10-01-2013 |
| CN 104325460 A | 04-02-2015 | KEINE | |
| CN 101913153 A | 15-12-2010 | KEINE | |

EPO FORM P0461

Für nähere Einzelheiten zu diesem Anhang : siehe Amtsblatt des Europäischen Patentamts, Nr.12/82